# EUROPEAN PATENT APPLICATION

(11) **EP 2 511 077 A2**
(43) Date of publication of application: **17.10.2012**
(21) Application number: 12163990.0
(22) Date of filing: 12.04.2012
(51) Int. Cl.: B29C 70/08, E04H 12/02, E04H 12/16, B29L 9/00, B29L 31/00, F03D 11/04

(54) **Apparatus, composite section, and method for on-site tower formation**

(30) Priority: 15.04.2011 US 201113087874
(71) Applicant: General Electric Company, Schenectady, NY 12345 (US)
(72) Inventor: Zheng, Danian, Greenville, SC South Carolina 29615 (US); Fang, Biao, Greenville, SC South Carolina 29615 (US); Quek, Shu Ching, Greenville, SC South Carolina 29615 (US); Willey, Lawrence Donald, Golden, CO Colorado 80403 (US)
(74) Representative: Bedford, Grant Richard

(57) **Abstract**

A composite section (120) including a concentric arrangement of inner and outer laminates (220, 230) having an interstice (316) therebetween is provided. Both the inner and outer laminates (220, 230) include a matrix material (820) and a fabric layer (734). A plurality of tubes (252) having an inner cavity (254), are situated in the interstice (214) of the inner and outer laminates (220, 230). A reinforcing material (250) is disposed in the interstice (214) and along the length (216) of the concentric arrangement unoccupied by the plurality of tubes (252) to create a composite section (120). A plurality of tension members (256) are threaded though the plurality of tubes (252) to provide post tensioning to each of the composite sections (120). The components are easily transported and assembled to form composite sections (120) to provide cost effective on-site tower formation. Also provided is an apparatus (500) to form the inner and outer laminates (220, 230) and a method of formation of the composite section (120).

## Description

The present invention relates generally to towers, and more specifically to an apparatus, method and composite sections that allow for on-site formation of towers.

Large utility wind turbines are getting higher and higher. However, it has been demonstrated that beyond certain height, the standard steel tubular tower is not economical, i.e., the cost of constructing additional height will outweigh the benefit of better wind conditions at higher altitude. This prompts people to look into alternative tower technologies to achieve greater tower heights.

Modularized or panelized concrete towers have become a new trend in the wind turbine tower industry because of the low material cost and field/local fabrication potential. While concrete is known as a good choice for compression, concrete requires special treatment to resist tension force. Typically rebar and post tension cables are used to reinforce the concrete. Furthermore, when forming concrete sections, to meet the necessary tolerance, a steel mold is used. The steel mold has to keep tight tolerance within 2 mm. As a result, steel molds require replacement after 50-100 castings of the module or panel for the composite sections of the towers. An additional drawback is that concrete is typically heavy, about 4 to 5 times greater than steel towers, which requires the construction of a heavy foundation to support the tower.

Therefore an apparatus, composite section, and method for on-site tower formation that do not suffer from the above drawbacks is desirable.

According to an exemplary embodiment of the present disclosure, a method for forming a composite section of a tower on-site is provided. The method includes constructing a composite shell. The step of constructing includes forming a concentric arrangement of inner and outer laminates wherein the concentric arrangement includes an interstice suitable for receiving a reinforcing layer. The step of forming the inner and outer laminates includes applying a matrix material to a fabric layer and curing the matrix material and the fabric layer. A plurality of tubes are placed in the interstice of the composite shell, wherein the plurality of tubes include an inner cavity and the plurality of tubes run the length of the composite shell, Next the interstice of the composite shell unoccupied by the plurality of tubes is filled with an amount of reinforcing material. Finally, the composite shell and the reinforcing material are joined together to form the composite section of a tower on-site.

According to another exemplary embodiment of the present disclosure, a composite section of a tower is provided. The composite section of the tower includes a concentric arrangement of inner and outer laminates. The inner and outer laminates include a matrix material and a fabric layer. The concentric arrangement includes a length and an interstice suitable for receiving a reinforcing layer. The composite section includes a plurality of tubes having an inner cavity, wherein the plurality of tubes are situated in the interstice along the length of the concentric arrangement. A reinforcing material is disposed in the interstice of the concentric arrangement unoccupied by the plurality of tubes, allowing for on-site formation of the composite section of a tower.

According to another exemplary embodiment of the present disclosure, an apparatus for forming a composite section of a tower on-site is provided. The apparatus includes a plurality of removable molds and a concentric arrangement of inner and outer laminates, arranged and disposed on the plurality of removable molds. The inner and outer laminates include a matrix material and a fabric layer. The concentric arrangement of the inner and outer laminates includes an interstice suitable for receiving a reinforcing layer. Upon curing the matrix material the inner and outer laminates are removed from the plurality of removable molds. Reinforcing material is added to the interstice to form a composite section of a tower on-site.

Various features and advantages of the present invention will be apparent from the following more detailed description of the preferred embodiment, taken in conjunction with the accompanying drawings which illustrate, by way of example, the principles of the invention. In the drawings:
FIG. 1 is a drawing of a tower constructed on-site of an embodiment of the present disclosure.
FIG. 2 is a cross-sectional view of a composite section taken along line 2-2 of the tower shown in FIG. 1 of an embodiment of the present disclosure.
FIG. 3 is a perspective view of a composite shell of an embodiment of the present disclosure.
FIG. 4 is a perspective cut-away sectional view of a composite section of an embodiment of the present disclosure.
FIG. 5 is a perspective view of an apparatus for forming the composite section of an embodiment of the present disclosure.
FIG. 6 is a cross-sectional view of a section taken along line 6-6 of the apparatus shown in FIG. 5 of an embodiment of the present disclosure.
FIG. 7 is a cross-sectional view of a section taken along line 7-7 of an embodiment of the present disclosure.
FIG. 8 is a flow diagram of the method of forming a tower on-site of an embodiment of the present disclosure. Wherever possible, the same reference numbers will be used throughout the drawings to represent the same parts.

Various embodiments of the present invention provide an apparatus, composite sections, and a method for on-site tower formation that do not suffer from the drawbacks in the prior art. The apparatus, composite sections and method may provide a cost effective and easily transportable means for on-site tower assembly.

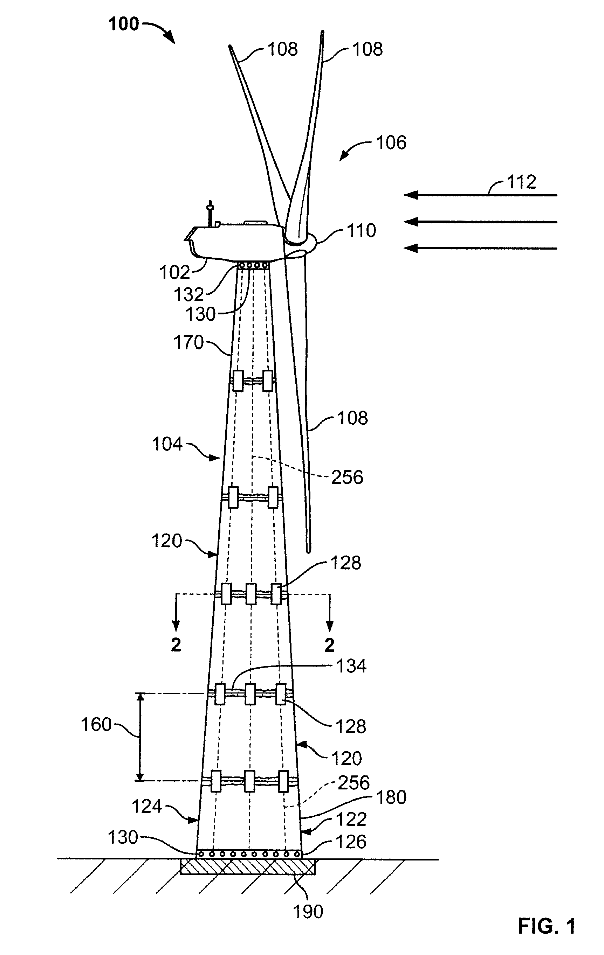

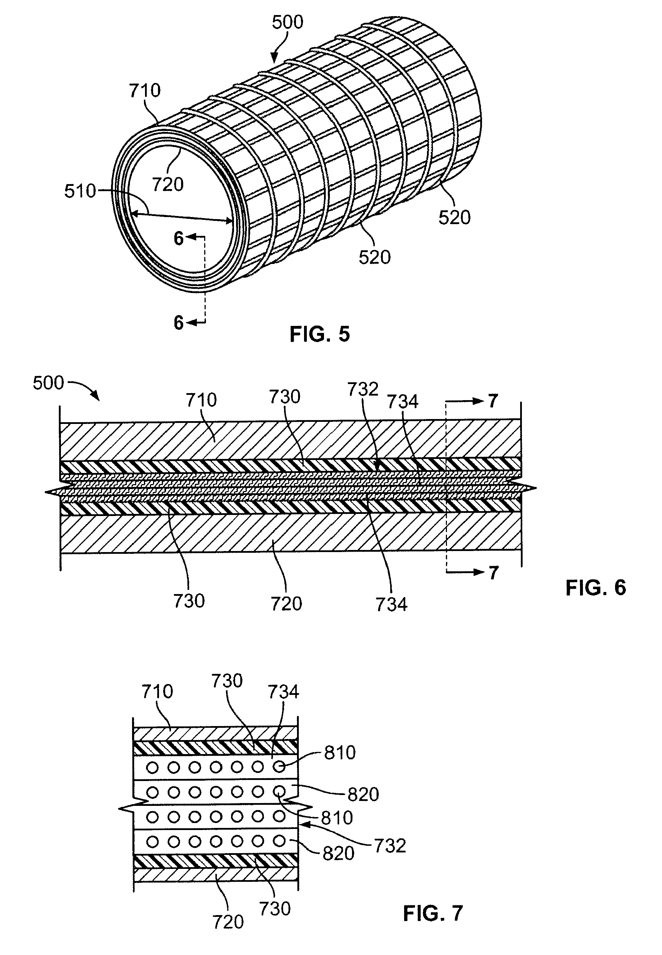

FIG. 1 illustrates an embodiment of a tower 104 formed using the apparatus 500 (see e.g., FIG. 5), composite sections 120, and method set forth in the present disclosure. The tower 104, a wind turbine tower, includes a nacelle 102 housing a generator (not shown in FIG. 1). The height of the tower 104 is selected based upon factors and conditions known in the art, and may extend to heights up to 100 meters or more. The wind turbine 100 may be installed on any terrain providing access to areas having desirable wind conditions. The terrain may vary greatly and may include, but is not limited to, mountainous terrain or off-shore locations. Wind turbine 100 also comprises a rotor 106 that includes one or more rotor blades 108 attached to a rotating hub 110. Although the wind turbine 100 illustrated in FIG. 1 includes three rotor blades 108, there are no specific limits on the number of rotor blades 108 required by the present disclosure.

As shown in FIG. 1, the wind direction 112 is directed toward the rotor 106 of the tower 104. The wind direction 112 causes compressive forces 124 on portion of the tower 104 opposite the wind direction 112. Tensile forces 122 are present on the portion of the tower 104 directly in the path of the wind direction 112. The tensile and compressive forces 122 and 124 vary depending on wind direction 112 and estimated tensile and compressive forces are calculated based on wind studies before placing the tower 104 at the site.

The tower 104 is formed on-site by stacking and joining a plurality of composite sections 120. The plurality of composite sections 120 are also formed on-site. In one embodiment, the height 160 of each of the composite sections 120 is approximately 5 meters to approximately 50 meters or approximately 10 meters to approximately 40 meters or approximately 15 meters to approximately 25 meters. In one embodiment, the height 160 of each of the composite sections 120 is the same. In another embodiment, the height 160 of each composite section 120 is varied, such that one composite section 120 has a different height than a second composite section 120. In yet another embodiment, tower 104 is formed from a single composite section 120, the composite section 120 height comprising the total tower height. As shown in FIG. 1, the tower 104 is formed by joining adjacent composite sections 120 by a plurality of tension members 256 (shown by dashed lines) and/or a plurality of connecting means 128. In one embodiment, connecting means 128 are not necessary to provide adequate support to join and secure the plurality of composite sections 120 to form the tower 104. Connecting means 128 are any suitable components capable of attaching the composite sections 120. Examples of connecting means 128 are, but not limited to, L-flanges, male-female joints in a vertical direction, grout, and any other suitable connecting devices.

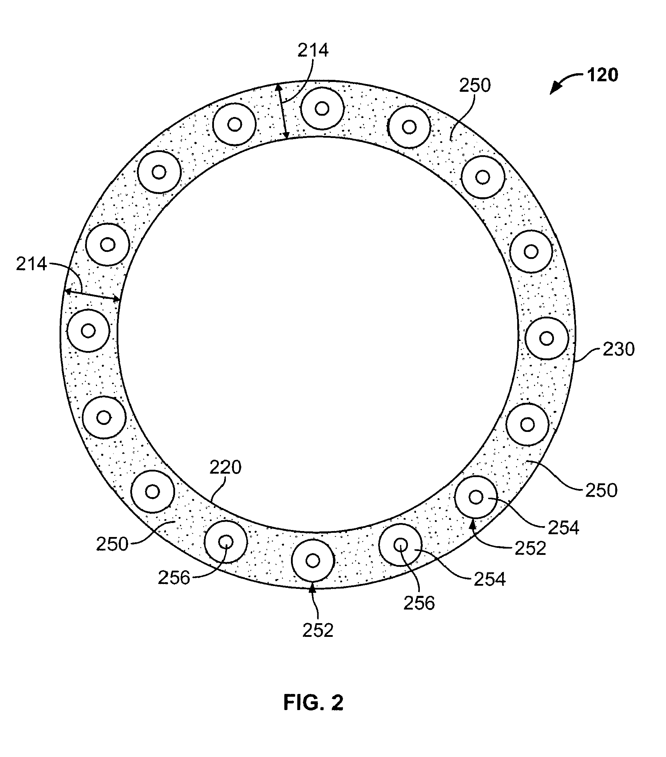

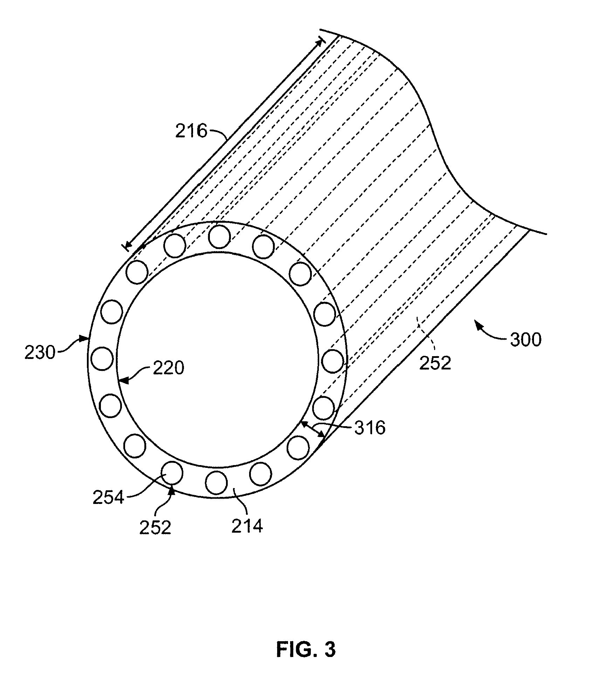

FIG. 2 is a cross-sectional view of a composite section 120 taken along line 2-2 of the tower shown in FIG. 1, the composite section 120 being formed on-site. Each composite section 120 of the tower 104 includes a concentric arrangement of an inner laminate 220 and an outer laminate 230. The inner and outer laminates 220 and 230 include a matrix material 820 and a fabric layer 734 (see FIG. 7). The concentric arrangement of the inner and outer laminates 220 and 230 includes a length 216 and an interstice 214 (see FIG. 3). As shown in FIG. 2, the composite section 120 also includes a plurality of tubes 252 each having an inner cavity 254. The plurality of tubes 252 are situated in the interstice 214 along the length 216 of the concentric arrangement of the composite section 120 created by the inner and outer laminates 220 and 230 (see FIG. 3). After the matrix material 820 and fabric layer 734 are cured, a reinforcing material 250 is disposed in the interstice 214 of the concentric arrangement unoccupied by the plurality of tubes 252, thereby allowing the composite section 120 to be formed on-site.

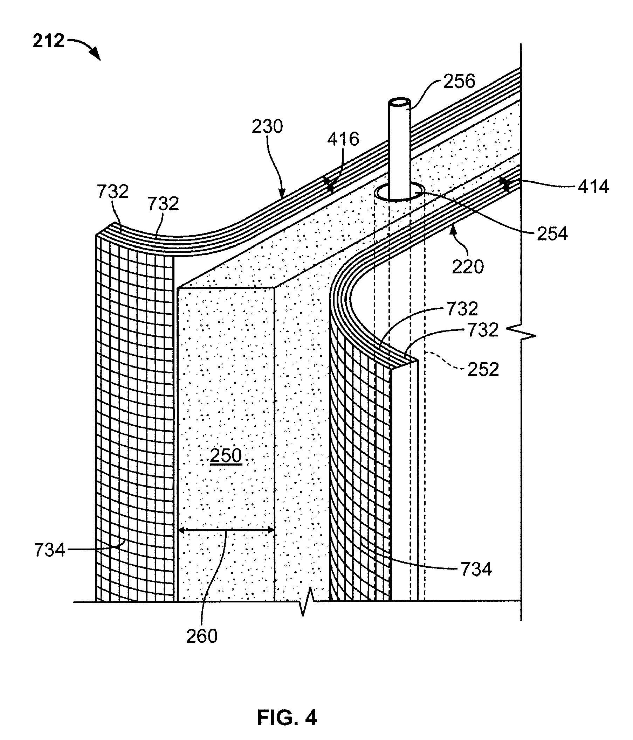

FIG. 3 is a partial perspective view of a composite shell 300 highlighting the concentric arrangement of the inner and outer laminates 220 and 230 before the reinforcing material 250 is deposited in the interstice 214. As shown in FIG. 3, a plurality of tubes 252 run the length 216 of the inner and outer laminates 220 and 230 and are situated in the interstice 214 formed by the concentric arrangement between the inner and outer laminates 220 and 230. Each of the embedded plurality of tubes 252 include an inner cavity 254 for receiving the plurality of tendons or tension members 256 (see FIG. 4). In one embodiment, the plurality of tubes 252 are constructed from a durable metal or plastic. An example of material for the plurality of tubes 252 is, but not limited to, polyvinyl chloride (PVC) piping. In one embodiment, the tube 252 has an outer diameter approximately that of the thickness 316 of the interstice 214. In another embodiment, the tube has an outer diameter that is less than the thickness 316 of the interstice 214. In another embodiment, the diameter of the tube 252 is approximately 25.4 millimeters (1 inch) to approximately 101.6 millimeters (4 inches), or alternatively approximately 38.1 millimeters (1.5 inches) to approximately 88.9 millimeters, or alternatively approximately 50.8 millimeters (2 inches) to approximately 76.2 millimeters (3 inches).

The number and spacing of the plurality of tubes 252 is determined based upon calculated tower conditions 104. To determine tower conditions a number of steps are taken. The first step is determining the design tower reinforcement thickness based on compression capability of the reinforcing material 250. The second step is calculating the total tension force on the wind-ward direction of the tower section, which is generally determined from wind studies conducted at the tower location area. The third step, which is based on total tension and tension member diameters, is calculating the number of tension members 256 to composite tension stress. The final step is evenly distributing the calculated number of tension members 256 around the circumference in the interstice 214 to provide the necessary support. In one embodiment, based on the calculated tower conditions 104, the number of tubes 252 in the composite section 120 is approximately eight to approximately thirty tubes 252, or approximately ten to approximately twenty-five tubes 252, or approximately twelve to approximately twenty tubes 252.

As shown in FIG. 4, tension members 256 are a single strand, a bar of reinforcing material, or a plurality of strands of reinforcing material woven, wound, or braided together. In one embodiment, the plurality of tension members 256 are selected from metals, such as but not limited to, stainless steel. In one embodiment, tension members 256 are selected from a multi-strand wire coated with a corrosion inhibiting grease and encased in an extruded plastic protective sheathing. Tension members 256 are approximately 3 millimeters (approximately 1/8 inch) to approximately 50 millimeters (approximately 2 inches), or alternatively approximately 3 millimeters (approximately 1/8 inch) to approximately 30 millimeters (approximately 1 inch), or approximately 3 millimeters (approximately 1/8 inch) to approximately 10 millimeters (approximately 3/8 inch) in thickness, and all subranges therebetween, but may be thinner or thicker depending on the tension required for composite section 120 and tower 104 formation. In one embodiment, the tension members 256 are unbounded, which allows for free movement of the tension members 256 relative to the reinforcement material 250. The number of tension members 256, size of the tension members 256, and anchoring points for the tension members 256, are budgeted according to the calculated tension stress of the reinforcing material 250 for the tower 104. In one embodiment, the number of tension members 256 is the same as the number of tubes 252 in the composite section 120.

FIG. 4 is a perspective cut-away sectional view of a composite section 120 of an embodiment of the present disclosure. The reinforcing material 250 is sandwiched between the inner laminate 220 and the outer laminate 230. The reinforcing material 250 is injected into, fills up, or occupies the interstice 214 between the inner and outer laminates 220 and 230. Examples of reinforcing material 250 are, but not limited to, concrete, ceramic materials, wood (balsa), core material (Webcore), and foam material made from materials such as, but not limited to, polyvinyl chloride (PVC), urethane, and polyethylene terephthalate (PET), and combinations thereof. In one embodiment, the thickness 260 of the reinforcing material 250 is approximately 2.54 centimeters (1 inch) to approximately 25.4 centimeters (10 inches) or approximately 5.08 centimeters (2 inches) to approximately 20.32 centimeters (8 inches) or approximately 7.62 centimeters (3 inches) to approximately 15.24 centimeters (6 inches). As shown in FIG. 4, the reinforcing material 250 surrounds a tube 252 having an inner cavity 254 that contains the tension member 256. In one embodiment, the reinforcing material 250 joins or bonds to the inner and outer laminates 220 and 230. The reinforcing material 250 and inner and outer laminates 220 and 230 are also held together by sheer forces that are placed on tower 104. In one embodiment, the reinforcing material 250 used to construct the composite section 120 is concrete. In this embodiment, the concrete is allowed to cure before assembling the composite sections 120 to construct the tower 104. Curing time varies depending on the type of cement used, temperature, and other environmental factors. In one embodiment, the concrete is cured over a time period of approximately 6 to approximately 30 days.

As shown in FIG. 4, the inner laminate 220 is constructed from at least one fabric layer 734 and matrix material 820 (see FIG. 7). The thickness 414 of the inner laminate 220 is approximately 5.08 millimeters (0.2 inches) to approximately 12.7 millimeters (0.5 inches), or approximately 6.35 millimeters (0.25 inches) to approximately 11.43 millimeters (0.45 inches), or approximately 7.62 millimeters (0.3 inches) to approximately 10.16 millimeters (0.4 inches). The outer laminate 230 is also constructed from at least one fabric layer 734 or a plurality of fabric layers 732 and matrix material 820 (see FIG. 7). The thickness 416 of the outer laminate 230 is approximately 5.08 millimeters (0.2 inches) to approximately 12.7 millimeters (0.5 inches), or approximately 6.35 millimeters (0.25 inches) to approximately 11.43 millimeters (0.45 inches), or approximately 7.62 millimeters (0.3 inches) to approximately 10.16 millimeters (0.4 inches).

The at least one fabric layer 734 of the inner and outer laminates 220 and 230 include at least one ply, but more preferably a plurality of plies 732 or plurality of fabric layers. The plurality of plies 732 are stacked, laid-up, or interwoven before being infused with the matrix material 820. The orientation of the plurality of plies 732 of the inner and outer laminates 220 and 230 is 0°, ± 45°, 90°, or combinations thereof. In one embodiment, the fabric layer 734 is constructed from plies 732 having 0° and 90° orientations, where more plies are provided in axial direction or the 90° orientation. Each of the plurality of plies 732 include a plurality of fibers 810 (see FIG. 7). In one embodiment, the plurality of plies 732 include fibers 810 having a unidirectional orientation, fibers 810 having a biaxial orientation, a chopped mat of fibers 810, a continuous strand mat of fibers 810, or a combination thereof. The plurality of fibers 810 are selected from, for example, but not limited to, lightweight fibers of glass, carbon, carbon and graphite, boron, aramid, para-aramid (e.g. Kevlar), other organic materials, and combinations thereof. The fiber 810 orientation and construction is determined based on the conditions that the tower 104 must withstand and can vary with different embodiments. In one embodiment, the plurality of plies 732 are pre-fabricated as a skin or plurality of fabric layers off-site and transported to the site and formed into the composite sections 120. The pre-fabricated skin is lightweight and flexible and includes the desired fibers 810, fiber orientation, fabric layers 732 and fabric layer orientation, and strength characteristics necessary for the tower 104 construction.

As shown in FIG. 7, the plurality of plies 732 and fibers 810 are surrounded or impregnated by a matrix material 820 or resin. In one embodiment, the matrix material 820 is selected from thermoset resins or thermoplastic resins. Examples of thermoset resins are, but not limited to, epoxy, polyester, vinyl ester, phenolic, bismaleimide, polyimide, and combinations thereof. Examples of thermoplastic resins are, but not limited to, nylon polysulfone, polyphenylene sulfide, polyetheretherketone, and combinations thereof. In one embodiment, the matrix material 820 is selected from epoxy, polyester, vinyl ester and combinations thereof. The fabric layer 734 is infused or impregnated with matrix material 820 using any suitable processing method, such as, but not limited to, resin transfer molding (RTM), resin film infusion, and open molding and vacuum bag layup. After the fabric layer 734 of the inner or outer laminates 220 or 230 is impregnated or infused with matrix material 820, the fabric layer 734 is cured using any suitable curing process, such as but not limited to, heat and/or ultra-violet radiation.

The inner and outer laminates 220 and 230 can be formed simultaneously or independently and are arranged to form concentric circles having an interstice 214 located therebetween (see FIG. 3). Generally, the inner laminate 220 provides axial reinforcement to the composite section 120 of the tower 104 and the outer laminate 230 provides circumferential reinforcement to the composite section 120 of the tower 104.

As shown in FIG. 5, another embodiment of the present disclosure includes an apparatus 500 for forming a composite section 120 of a tower 104 on-site. The apparatus 500 includes a plurality of removable molds 710 and 720. In one embodiment, the removable molds are constructed from a first cylindrical frame and a second cylindrical frame. In this embodiment, the first and second cylindrical frames should be wrapped with plastic or other suitable material covers to form the removable mold 710 and 720. In another embodiment, the removable molds are constructed from a rigid cylindrical container. The first removable mold 710 and the second removable mold 720 are constructed from any suitable non-deforming material that holds a cylindrical shape. Examples of suitable materials for the removable molds 710 and 720 include, but are not limited to, metals, thermoplastics, and combinations thereof. The apparatus 500 is used in the same manner to form both the inner laminate 220 and the outer laminate 230; the only difference is that the diameter 510 of the apparatus 500 is larger to form the outer laminate 230. In one embodiment, the inner and outer laminates 220 and 230 are formed independently using the apparatus 500 and then concentrically arranged. In another embodiment, the apparatus 500 can be constructed to form both the inner and outer laminates 220 and 230 simultaneously.

FIG. 6 is a sectional view of the apparatus 500 taken along line 6-6. The apparatus 500 includes the removable molds 710 and 720 surrounding a plastic layer 730. Initially, the plastic layer 730 surrounds the dry plurality of plies 732 that make up the at least one fabric layer 734. In one embodiment, the resin or matrix material 820 is directed through the infusion tubes 520 and is dispersed throughout the plurality of plies 732 by pressure or other suitable means. Using any suitable method the plurality of plies 732 and matrix material 820 are cured to form the inner and outer laminates 220 and 230 of the composite shell 300. In another embodiment, pre-impregnated fibers (prepreg) containing resin or matrix material 820 are used with the apparatus 500. In this embodiment, the prepreg fibers are laid-up in the removable molds 710 and 720 and heat is applied to raise the temperature to cure the prepreg on-site. In yet another embodiment, a hand-layup technique is used with the apparatus 500, where the fibers are coated with resin and fabricated in situ using the removable molds 710 and 720.

To form the inner and outer laminates 220 and 230 a plurality of fabric layers 734 are arranged and disposed on the plurality of removable molds 710 and 720 of the apparatus 500. As shown in FIG. 5, the apparatus 500 includes a plurality of resin infusion tubes 520 for introducing the matrix material 820 into the fabric layer 734 to form the inner and outer laminates 220 and 230. Upon curing the matrix material 820 that was introduced into the fabric layer, the inner and outer laminates 220 and 230 are formed. The formed inner and outer laminates 220 and 230 are removed from the plurality of removable molds 710 and 720 and plastic 730. The inner and outer laminates 220 and 230 are concentrically arranged as shown in FIG. 3. The plurality of tubes 252 are added to the concentric arrangement (see FIG. 3) of the inner and outer laminates 220 and 230. Next, the reinforcing material 250 is added to the interstice 214 of the inner and outer laminates 220 and 230 not occupied by the plurality of tubes 252 to form a composite section 120 of a tower 104 on-site as shown in FIGS. 2 and 4.

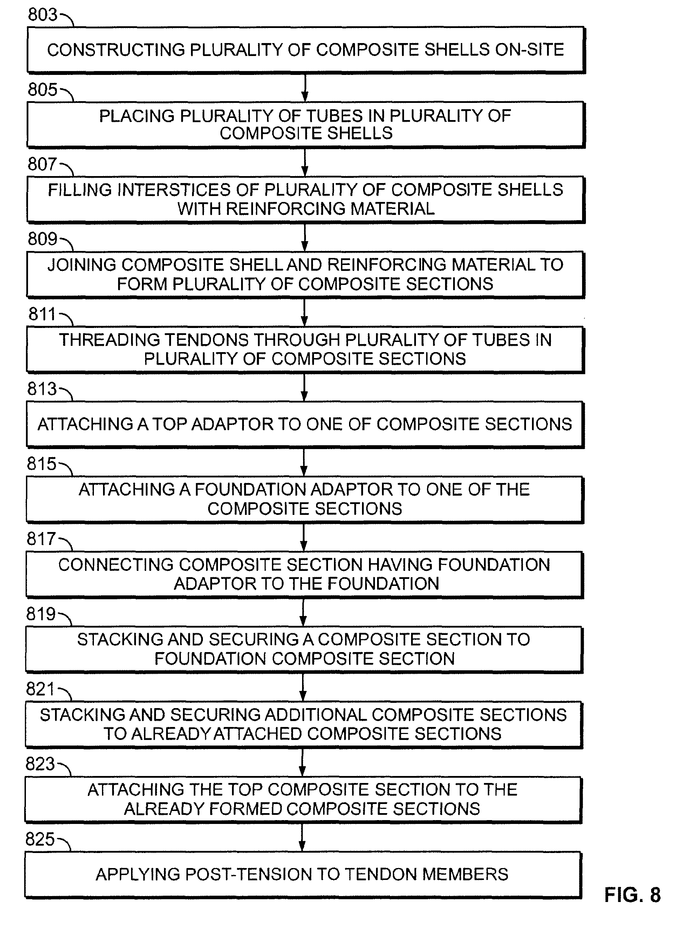

FIG. 8 is a diagram of the method of forming a tower 104 from at least one composite section 120 on-site. First, a plurality of composite shells 300 are constructed on-site, Step 803. Each of the plurality of composite shells 300 includes an inner laminate 220 and an outer laminate 230. Step 803 includes using the molding apparatus 500 to form the inner and outer laminates 220 and 230 by fabric lay-up, impregnation and curing. The inner laminate 220 and the outer laminate 230 are formed into a concentric arrangement creating an interstice 214 therebetween (see FIG. 3). Next, a plurality of tubes 252 are placed or inserted into the interstice 214 of the composite shells 300, Step 805. The remaining portion of the interstice 214 not occupied by the plurality of tubes 252 is filled with reinforcing material 252, Step 807. Step 809 is joining the composite shell 300 and reinforcing material 252 to form a plurality of composite sections 120. Step 809 generally includes allowing the reinforcing material 250 to cure, thereby effectively bonding with the composite shell 300. Next, tendons or tension members 256 (see FIGS. 1 and 4) are threaded through the plurality of tubes 252 of the composite sections 120, Step 811. One of the composite sections 120 is designated as the top section 170 and an adaptor 132 (see FIG. 1) is secured using fastening means 130 to the composite section 120, Step 813. The top adaptor 132 provides an attachment point for tower equipment such as, but not limited to, a yaw or nacelle, to be attached to the top of the constructed tower 104 (see FIG. 1). One of the formed composite sections 120 is designated as a foundation section 180 and a foundation adaptor 126 (see FIG. 1) is secured using fastening means 130 to the composite section 120, Step 815. Next, the foundation section 180 is secured to the foundation 190 for the tower 104, Step 817 (see FIG. 1). One composite section 120 is stacked on, aligned with, and secured to the foundation section 180, Step 819. The remaining composite sections 120 are stacked on, aligned with, and secured to adjacent composite sections 120 using a crane or other suitable equipment, Step 821, until the desired height for the tower 104 is reached. The top composite section 170 is attached to the already formed composite sections 120, Step 823. After the composite sections 120 have been sufficiently secured, post-tensioning is applied to the tendon members 256, Step 825. The post-tensioning is applied by any suitable means, such as, but not limited to, hydraulic jacks and other equipment capable of providing the desired tension to overcome the calculated tension stress of the tower 104.

One advantage of an embodiment of the present disclosure includes a method for on-site formation of towers in remote locations.

Another advantage of an embodiment of the present disclosure includes readily transported items for on-site tower formation.

Another advantage of an embodiment of the present disclosure includes composite sections that are flexible and easily transported prior to on-site assembly.

Another advantage of an embodiment of the present disclosure is an exemplary tower that is assembled on-site that withstands compressive and tensile stresses of a tower subject large cyclic loading.

Another advantage of an embodiment of the present disclosure is a tower formed from composite sections having high mechanical strength.

Yet another advantage of an embodiment of the present disclosure is a lightweight tower that uses less material than conventional tower formation.

Another advantage of an embodiment of the present disclosure is a tower that is scalable.

Another advantage of an embodiment of the present disclosure is a tower that is constructed without the requirement of tight tolerances required in convention tower formation.

Another advantage of an embodiment of the present disclosure is a tower that is formed using inexpensive and replaceable molds.

Yet another advantage of an embodiment of the present disclosure is a tower that that provides cost savings in the manufacturing, the installation, and the transportation of the tower.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A method for forming a composite section of a tower, comprising:
   constructing a composite shell, the step of constructing including:
      forming a concentric arrangement of inner and outer laminates, the step of forming the inner and outer laminates comprising:
         applying a matrix material to a fabric layer;
         curing the matrix material and the fabric layer; and
      wherein the concentric arrangement includes an interstice suitable for receiving a reinforcing layer;
   placing a plurality of tubes in the interstice of the composite shell, wherein the plurality of tubes include an inner cavity and the plurality of tubes run the length of the composite shell;
   filling the interstice of the composite shell unoccupied by the plurality of tubes with an amount of reinforcing material; and
   joining the composite shell to the reinforcing material to form the composite section of a tower.
2. The method of clause 1, wherein a plurality of composite sections are used to form the tower, comprising:
   constructing a plurality of composite sections on-site;
   threading a plurality of tension members though the inner cavity of the plurality of tubes situated in the plurality of composite sections;
   attaching one of the plurality of composite sections to a base of the tower;
   securing the composite section to the base using fastening means;
   attaching and securing another composite section to the composite section attached to the base; and
   repeating the previous step until desired tower height is achieved.
3. The method of any preceding clause, wherein a single composite section forms a wind turbine tower.
4. A composite section of a tower, comprising:
   a concentric arrangement of an inner laminate and an outer laminate, the inner and outer laminates including:
      a matrix material, and
      a fabric layer, wherein the concentric arrangement includes a length and an interstice;
   a plurality of tubes having an inner cavity, wherein the plurality of tubes are situated in the interstice along the length of the concentric arrangement; and
   a reinforcing material disposed in the interstice and along the length of the concentric arrangement unoccupied by the plurality of tubes; and
   wherein the composite section is formed on-site.
5. The composite section of any preceding clause, further including a plurality of tension members situated in the inner cavity of the plurality of tubes in the section.
6. The composite section of any preceding clause, wherein a single composite section forms a wind turbine tower.
7. The composite section of any preceding clause, wherein the reinforcing material is concrete.
8. The composite of any preceding clause, wherein upon curing the reinforcing material bonds with the inner and outer laminates of the concentric arrangement.
9. The composite section of any preceding clause, wherein the inner laminate provides axial reinforcement to the composite section of tower and wherein the outer laminate provides circumferential reinforcement to the composite section of the tower.
10. The composite section of any preceding clause, wherein the composite section and tower are formed on-site.
11. The composite section of any preceding clause, wherein the matrix material is selected from thermoset resins including epoxy, polyester, vinyl ester, phenolic, bismaleimide and polyimide or thermoplastic resins including nylon polysulfone, polyphenylene sulfide, and polyetheretherketone
12. The composite section of any preceding clause, wherein the inner laminate has a thickness of approximately 5.08 millimeters to approximately 12.70 millimeters and the outer laminate layer has a thickness of approximately 5.08 millimeters to approximately 12.70 millimeters.
13. The composite section of any preceding clause, wherein the fabric layer of the inner and outer laminates includes a plurality of plies comprising fibers having a unidirectional orientation, fibers having a biaxial orientation, a chopped mat of fibers, a continuous strand mat of fibers, or a combination thereof.
14. The composite section of any preceding clause, wherein the orientation of the plurality of plies of the inner laminate and the outer laminate is 0°, ± 45°, 90°, or combinations thereof.
15. The composite section of any preceding clause, wherein the fibers are selected from lightweight fibers of glass, carbon, carbon and graphite, boron, aramid, para-aramid, other organic materials, and combinations thereof.
16. An apparatus for forming a composite section of a tower, comprising:
   a plurality of removable molds;
   a concentric arrangement of inner and outer laminates, arranged and disposed on the plurality of removable molds, the inner and outer laminates including:
      a matrix material, and
      a fabric layer, wherein the concentric arrangement includes an interstice suitable for receiving a reinforcing layer;
   wherein upon curing the matrix material the inner and outer laminates are removed from the plurality of removable molds; and
   wherein the reinforcing material is added to the interstice between the inner and outer laminates to form the composite section of the tower.
17. The apparatus of any preceding clause, wherein the matrix material is selected from thermoset resins including epoxy, polyester, vinyl ester, phenolic, bismaleimide and polyimide or thermoplastic resins including nylon polysulfone, polyphenylene sulfide, and polyetheretherketone.
18. The apparatus of any preceding clause, wherein the plurality of removable molds include a first cylindrical frame and a second cylindrical frame, wherein the first cylindrical frame includes an outer surface covered with a first plastic sheet and the second cylindrical frame includes an inner surface covered with a second plastic sheet, wherein the fabric layer and matrix material of the inner and outer laminates are adjacent to first plastic sheet and the second plastic sheet.
19. The apparatus of any preceding clause, wherein first and second cylindrical frames are constructed from metals, wire, composites and combinations thereof.
20. The apparatus of any preceding clause, wherein the plurality of removable molds are a rigid cylindrical container constructed from metal, plastic, composites, or combinations thereof.

## Claims

1. A composite section of a tower (120), comprising:
a concentric arrangement of an inner laminate (220) and an outer laminate (230), the inner (220) and outer laminates (230) including:
a matrix material (820), and
a fabric layer (734), wherein the concentric arrangement includes a length (216) and an interstice (214);
a plurality of tubes (252) having an inner cavity (254), wherein the plurality of tubes (252) are situated in the interstice (214) along the length (216) of the concentric arrangement; and
a reinforcing material (250) disposed in the interstice (214) and along the length (216) of the concentric arrangement unoccupied by the plurality of tubes (252); and
wherein the composite section (120) is formed on-site.

2. The composite section (120) of claim 1, further including a plurality of tension members (256) situated in the inner cavity (254) of the plurality of tubes (252) in the composite section (120).

3. The composite section (120) of any preceding claim, wherein a single composite section (120) forms a wind turbine (100) tower (104).

4. The composite section (120) of any preceding claim, wherein the reinforcing material (250) is concrete.

5. The composite section (120) of any preceding claim, wherein upon curing the reinforcing material (250) bonds with the inner (220) and outer laminates (230) of the concentric arrangement.

6. The composite section (120) of any preceding claim, wherein the inner laminate (220) provides axial reinforcement to the composite section of tower (120) and wherein the outer laminate (230) provides circumferential reinforcement to the composite section (120) of the tower (104).

7. The composite section (120) of any preceding claim, wherein the composite section (120) and tower (104) are formed on-site.

8. The composite section (120) of any preceding claim, wherein the inner laminate (220) has a thickness of approximately 5.08 millimeters to approximately 12.70 millimeters and the outer laminate (230) layer has a thickness of approximately 5.08 millimeters to approximately 12.70 millimeters.

9. The composite section (120) of any preceding claim, wherein the fabric layer (734) of the inner (220) and outer laminates (230) includes a plurality of plies (732) comprising fibers (810) having a unidirectional orientation, fibers (810) having a biaxial orientation, a chopped mat of fibers, a continuous strand mat of fibers, or a combination thereof.

10. The composite section (120) of any preceding claim, wherein the orientation of the plurality of plies (732) of the inner laminate (220) and the outer laminate (230) is 0°, ± 45°, 90°, or combinations thereof.
